# EUROPEAN PATENT SPECIFICATION

(11) **EP 2 816 780 B1**
(45) Date of publication and mention of the grant of the patent: **18.05.2016**
(21) Application number: 14184154.4
(22) Date of filing: 07.03.2003
(51) Int. Cl.: H04L 29/06, H04W 12/06

(54) **Local area network**
Lokales Netzwerk
Réseau local

(30) Priority: 08.03.2002 US 362865 P
(43) Date of publication of application: 24.12.2014
(62) Divisional of application: 12156949.5
(73) Proprietor: Certicom Corp., Mississauga, ON L4W 5L1 (CA)
(72) Inventor: Vanstone, Scott Alexander, Campbellville, Ontario L0P 1B0 (CA); Struik, Marinus, Toronto, Ontario M4K 3K8 (CA)
(74) Representative: Gill Jennings & Every LLP

(56) References cited:
- WO-A1-01/45437
- WO-A2-01/31836

## Description

### FIELD OF THE INVENTION

This invention relates to communication networks, more particularly it relates to security within these networks.

### DESCRIPTION OF THE PRIOR ART

One of the most significant recent developments in wireless technologies is the emergence of wireless personal area networking. Wireless personal area networks WPANs™ use radio frequencies to transmit both voice and data, and are specified by standards such as IEEE standard 802.15 or 802.3 from the Institute of Electrical and Electronics Engineers Standards Association (IEEE-SA), among other specifications. The 802.15 specification is ideal for linking notebook computers, mobile phones, personal digital assistants (PDAs), digital cameras, and other handheld devices to do business at home, on the road, or in the office.

These wireless networks are formed by a number of devices joining and leaving the network in an ad hoc manner, hence such networks are known as ad hoc networks or piconets. Thus, the set of devices connected to the ad hoc network any given time may fluctuate, and so the topology of the network is dynamic. It is desirable to control access to the network and to provide a mechanism for establishing and maintaining security. Traditionally, security is established using a central device or a piconet controller (PNC) which controls access and distributes keys within the network. A drawback of this scheme is that each member of the network is required to trust the PNC.

Admission to the piconet is based on the outcome of the following protocols between the prospective joining device and the PNC of the piconet. The joining device and the PNC engage in a mutual entity authentication protocol based on public key or symmetric key techniques. The true device identity of both the joining device and the PNC is determined using this protocol. A link key can also be derived based on the authentic keys of both parties. Another protocol involves using authorization techniques between both devices, based on access control lists (ACLs). The Access Control Lists may be dynamically updated, similar to PDA functionality, where a determination is made whether an entity is added or removed from the ACL at entry. This determination may be made by an operator, such as a human operator. For devices that lack a user interface, this update mechanism may be invoked by an open enrollment period followed by a lock-up step, for example, which may be confirmed by a button push or be a simple re-set of the whole list. This may be performed by actuating a re-set or re-initialize button on the device.

Thus devices in the piconet fully depend on information provided by the PNC regarding which devices have been admitted to the piconet, since admission is based on communication between the PNC and a joining device only. If however an improper list of devices, DeviceList, in the piconet has been distributed by the PNC, either by error or maliciously, the security of the network is jeopardised. Each device has a short hand address, such as a local 8-bit ID, and a long hand address, such as a global 48-bit device ID. For example, in a piconet in which since all devices share a common broadcast key, the list of admitted devices to the piconet is L: = (local 8-bit device ID, global 48-bit device ID), then the failure to obtain the complete and authentic list of admitted devices has the following consequences:

### 'Fly on the wall' scenario :

If a device obtains an incomplete list: L' c (L'≠ L) of admitted devices, all devices in the complementary set L\ L' are 'invisible' to the device. Hence, the device might mistakenly think it is sharing secured information only with devices from the list L', whereas actually it is unknowingly sharing with other devices of the set L as well. This obviously violates sound security practice.

### 'Switchboard'scenario':

If the binding between the local device ID and the global device ID is incorrectly received, for example if 2 entries are interchanged, a device might direct information to the improper device and so compromise the intended security. This property also holds in other settings where a key-generating party does not share complete and authentic information on the composition of the key-sharing group itself with the other members of this group. Therefore, these scenarios present a security model in which there is complete trust or a security model in which a device trusts no other device, however a hybrid model of these two models is possible.

Document from Venkatraman L. et al, "A novel authentication scheme fopr ad hoc networks". Department of Electrical and Computer Engineering and Computer Science, vol. 3, 23 September 2000, pages 1268-1273, describes a method for establishing and maintaining distributed security between a plurality of devices in an ad hoc network, where one of said devices is assigned a control function to control access by other devices to said network, the devices authenticate themselves periodically with said other devices in order to determine status of said other devices, and arrange themselves into a plurality of trust groups, each group having a group key for distribution within said trust group; nevertheless the devices do not generate the keys themselves, and no key agreement is done to establish a secure communication channel.

The document from S. Jacobs and M.S. Corson, "Manet Authentivcation Architecture", Internet draft, published on March 1999, describes a distributed security system for a plurality of devices in a communication network, each of said devices being responsible for generating, distributing and controlling its own key for access to said communication network and using said keys to establish a trusted network, each device's membership to said communication network being checked periodically by other devices, in order to establish which devices are allowed access to said communication network and said trusted network. It does not describe a challenge response protocol to perform authentication among the different devices.

The international patent application WO 01/31836 describes a system for establishing trust relationships in ad hoc networks.

Accordingly it is an object of the present invention to mitigate or obviate at least one of above-mentioned disadvantages.

### SUMMARY OF THE INVENTION

The present invention provides a method according to claim 1 and a security manager according to claim 10.

### BRIEF DESCRIPTION OF THE DRAWINGS

These and other features of the preferred embodiments of the invention will become more apparent in the following detailed description in which reference is made to the appended drawings wherein
Figure 1 is a communication network;
Figure 2 is a group structure for a security model having different trust levels;
Figure 3 is a group structure for a security model having different trust levels;
Figure 4 is a group structure for a security model having different trust levels;
Figure 5 is a group structure for a security model having different trust levels;
Figure 6 shows communication between piconets;
Figure 7 shows a flowchart outlining steps for establishing secure communication between devices in different piconets; and
Figure 8 shows secure communication between piconets;

### DETAILED DESCRIPTION OF THE PREFERRED EMBODIMENTS

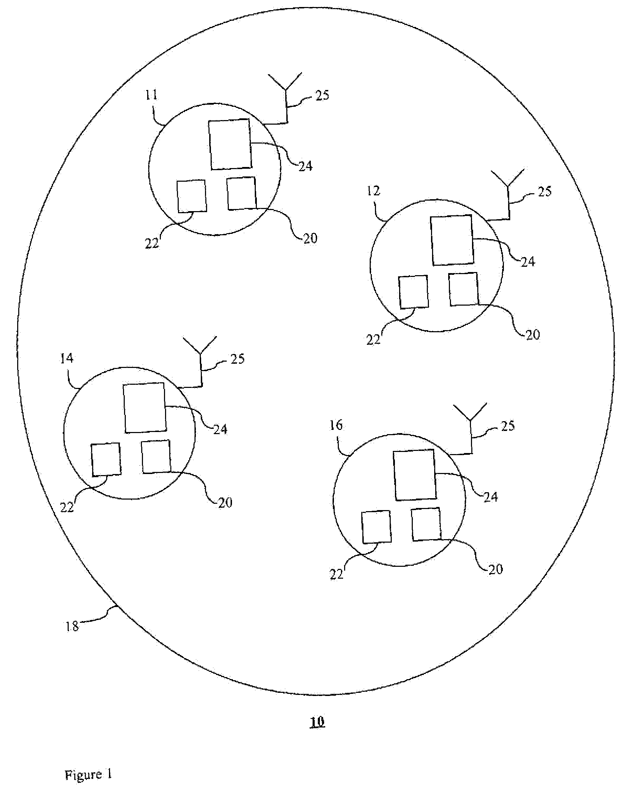

Reference is first made to Figure 1, which shows an overview of a distributed security system 10 having a plurality of communication devices 11, 12, 14, 16 in a communication network 18, in a preferred embodiment. The communication network 18 may be a wireless personal area network (WPAN™) such as a piconet, in which the devices 11, 12, 14, 16 connect to each other in an ad hoc fashion. The devices 11,12, 14, 16 may be portable and mobile computing devices such as PCs, Personal Digital Assistants (PDAs), peripherals, cell phones, pagers, consumer electronics, and other handheld devices. It will be understood that such devices 11, 12, 14,16 include addressing information to facilitate communication within the network 18. The addressing information includes a local device ID, having 8 bits for example, and a device ID, such as, an IEEE MAC Address including 48 bits. Therefore, upon a device 11, 12, 14,16 joining the network it is assigned an unused local ID. Generally, one device 11 will act as a master or a piconet network controller (PNC), and the other devices 12, 14, 16 act as slaves for the duration of the piconet 18 connection. The PNC 11 sets a clock, a hopping pattern determined by device ID, and assigns time for connections between all devices 11, 12, 14 16. Thus, each piconet 18 includes a unique hopping pattern/ID, and the PNC 11 gives slaves 12,14 16 the clock and a local device ID, which is optionally used in conjunction with the EEE MAC Address, to form the piconet 18.

The PNC 11 activates an access controller 20 using ID's of the devices and optionally an access control list such that devices 12, 14, 16 that have been positively authenticated and have been authorized are admitted to the piconet 18. The PNC 11 also includes a traffic controller 22 to regulate data flow within the network 18. This may be done by allocating time slots to each device 11, 12, 14, 16 for message distribution. Each of the devices 11, 12, 14, 16 includes a security manager function 24. The security manager function 24 generates keys for communicating with other devices 11, 12, 14, 16 within the network 18, and distributes these keys to selected device members 11, 12, 14, 16 of the network 18. Each device 11, 12, 14 or 16 includes a transceiver 25 for establishing a communication channel with other devices 11, 12, 14, 16. When distributing a key, the security manager function 24 also indicates to the other devices 11, 12, 14, 16 in the network 18 the other devices 11, 12, 14, 16 to which the key is being distributed. Thus, there is no reliance on other devices 11, 12, 14, 16 for trust functionality, as each device 11, 12, 14 or 16 need only trust itself, to form a distributed security regime.

Thus, the security manager function 24 can establish a trust set, or TrustList, which indicates which of the devices 11,12, 14,16 in the network the security manager 24 of that particular device 11,12, 14 or 16 is prepared to trust. The security manager function 24 may also attribute different levels of trust to each of the established trust sets. In this way the equivalent of a centralised network 18 can be established where a device 11, 12, 14 or 16 trusts every other device 11, 12, 14 or 16; or an entirely decentralised network 18 is provided where a device 11, 12, 14 or 16 trusts no other device 11, 12, 14 or 16 but itself.

Similarly the security manager 24 receiving a key from another device 11, 12, 14, 16 can determine its source and allocate to that key a level of trust that determines the functions for which the key will be used. Thus the security manager 24 may determine that the key is from a trusted party 11, 12, 14 or 16 and the key may be used to both decrypt messages received from that trusted party 11, 12, 14 or 16 and encrypt messages sent to that trusted party 11, 12, 14 or 16. Alternatively, the security manager function 24 may determine that the key originates at a party 11, 12, 14 or 16 not trusted by itself and only permit the key to be used for decryption. However, the device 11, 12, 14 or 16 may choose to ignore data, rather than going through the effort of having to decrypt the data first. This option may be useful for dealing with unsolicited communication or 'junkmail'.

The security manager 24 also includes methods of determining which of the devices 11, 12, 14 or 16 are presently active in the network 18. These methods include the functions of each device 11, 12, 14 or 16 re-authenticating itself with each of its key sharing parties 11, 12, 14 or 16 at predetermined time. One such method includes the steps of periodically performing a 'heartbeat operation' in the form of a challenge response protocol to determine which devices are presently included in the network 18, and adjusting the groups and trust levels accordingly. Thus, each device 11, 12, 14 or 16 may dynamically update its own TrustList to reflect changes in the trust relationships. For devices 11, 12, 14 or 16 that lack a user interface, this update mechanism may be invoked by an open enrollment period followed by a lock-up step, possibly confirmed by a button push, or it may be a simple re-set of the whole list, for example by pushing a re-set or re- initialize button on the device 11, 12, 14 or 16. Moreover, some of the changes might be invoked by a third entity that performs remote or delegated trust management for that device.

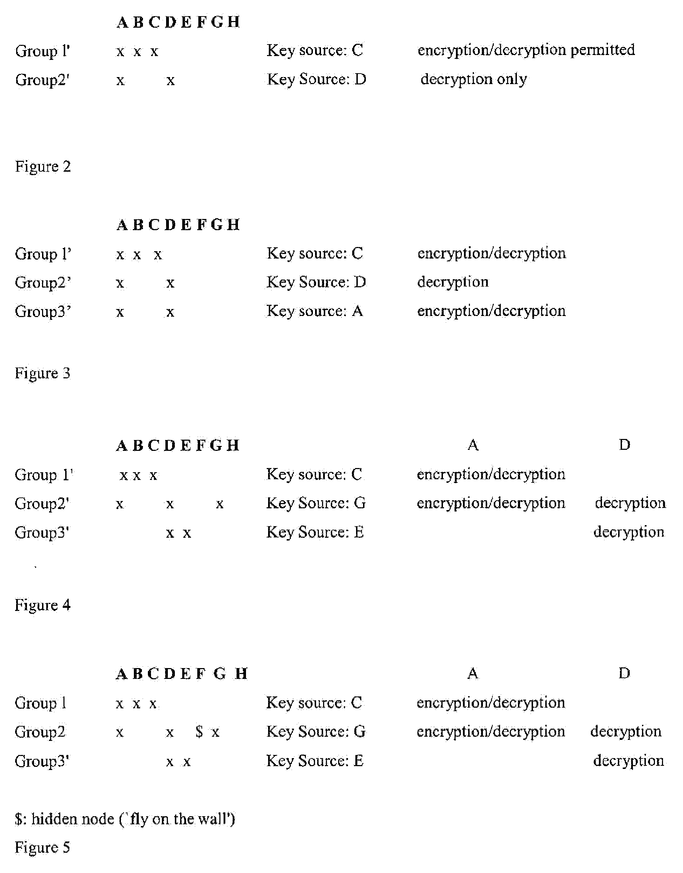

Referring now to Figure 2, in order to describe the distributed security model, as an example, assume the PNC 11 permits access to devices A, B, C, D, E, F, G, H, then the DeviceSet: = {A, B, C, D, E, F, G, H}. However if the device A only trusts devices A, B, C then TrustSet (A): = {A, B, C} that is Group 1. Also, device A may participate in other groups having a different trust set, such as Group 2, having only device D. Thus the security manger function 24 of device A senses Group 1 and Group 2 with different constituent members and different levels of trust. For example, in Group 1, if device C is the key source, and since device C is part of the TrustSet (A), this key by device C is distributed which is used for both encryption/decryption permitted as C, and device A only accepts keys transferred to itself by devices DEV ε TrustSet (A), for encryption and decryption purposes. In Group 2, as device D is not part of TrustSet (A), then A accepts a key from device D, and any other devices E, F, G and H, which are not part of TrustSet (A), for decryption purposes only. Accordingly if device A desires to communicate to Group2 members, the device A generates a new group key to form a new group, Group 3, and device A distributes this new group key to the members of Group2', that is device D. Therefore, the groups then under the control of the security manager of device A will then be Group 1, Group 2, as mentioned above, and Group 3, as shown Figure 3.

The flexibility of the security managers 24 of devices A, B, C, D, E, F, G, H permits different network structures to be mimicked. For example, using the notation above, if DeviceSet: = {A, B, C, D, E, F, G, H}, and TrustSet (A): =Universe, then device A can be considered an altruistic device which provides a structure equivalent to a centralized model. Conversely, if TrustSet (D): = {D}, then device D is an egocentric device, and is a structure equivalent a completely decentralized model. Then, looking at Figure 4, device A participates in Groups 1, 2 and 3, all groups having with differing trust relationships. For example, in Group 1 having devices A, B and C, if the key source is device C, then this group key is used for encryption and decryption, as device A trusts all devices B, C, D, E, F, G and H, which of course includes the key source C. However, in Group 2 having devices A, D, and G, with the key source being device G, once again device A uses this group key is used for encryption and decryption, while device D uses it for decryption only as it does not trust any other device A, B, C, E, F, G or H. In Group 3 having devices D and E, with the key source being device E, device D uses the group key for decryption only as it does not trust device E. As device A is not included in Group 3, it does not receive the key.

In Figure 5, where one of the device F is hidden from the other members in the network 18, then Group 2 does not include the full list of member devices, A, D, G and H. Therefore, device D can not communicate with device F as the heartbeat operation will indicate that device D is not alive. Since the 8-bit address or the 48-bit address of device is unavailable, there is no communication between D and device F. Therefore, device D uses the group keys for decryption only.

Thus, these different group structures as shown in Figures 2, 3, 4 and 5 may be established within the same network 18 by using a decentralised or distributed security management scheme having the ability to set different levels of trust per device. This may be used in a number of ways, such as admission of devices A, B, C, D, E, F, G and H, such as PDAs to a piconet 18 based on different subscription models. For example, one subscription model may include charging a fee for airtime/bandwidth fee, while another model may be based on charging for content. In this example, the models may be implemented in a building, such as an airport or fitness club, the network 18 includes a fixed PNC 11 on a ceiling and the PNC 11 multicasting to subscribing devices only, or the models may be implemented between individual devices. Thus, by separating the role of the security manager 24 from that of the PNC 11, charging models that differentiate between airtime/bandwidth cost and content/subscription cost are possible, as these charging models might be operated by different entities A, B, C, D, E, F, G or H, or another intermediate entity.

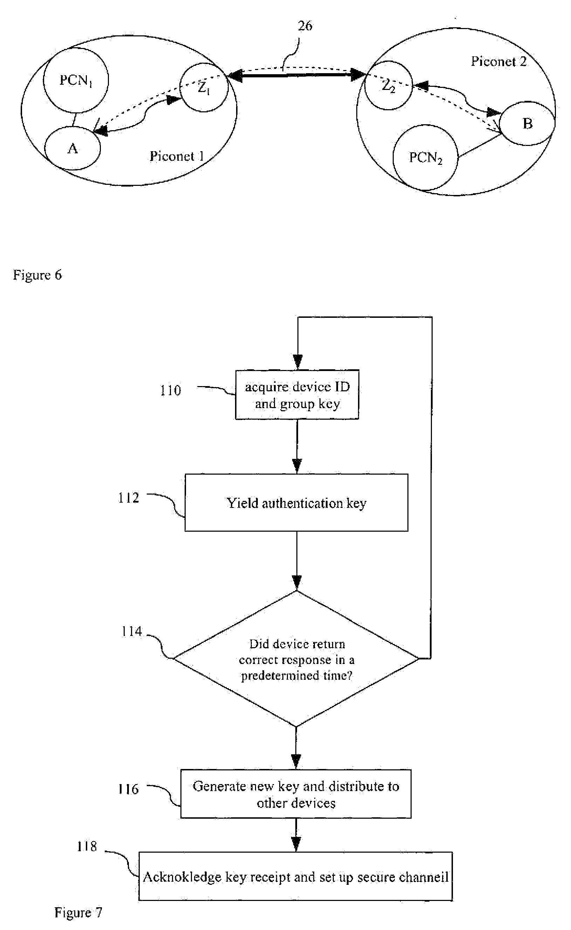

It will be seen therefore that a versatile network 18 is provided, and moreover the removal of a device A, B, C, D, E, F, G or H from the network 18 does not require re-establishment of all keys in the network 18 as the individual devices A, B, C, D, E, F, G or H control the distribution of the keys. Figure 6 shows communication between a device A in piconet 1 with another device B in piconet 2, where Z₁ and Z₂ are members of piconet 1 and piconet 2, respectively. Z₁ and Z₂ include transceivers 25 for establishing a communication channel or relay channel 26 between piconet 1 and piconet 2. Thus, Z₁ listens in on all traffic and sends all traffic destined for device B to Z₂ via the relay channel 26. Upon receipt of the traffic relayed by Z₁, Z₂ further broadcasts this traffic to B. Z₁ and Z₂ include WPAN functionality and may act as data relay agents only, and thus may not process data. Piconet 1 and piconet 2 include respective PNC₁ and PNC₂ and thus devices A and B only need PNC₁ and PNC₂, respectively, for allocation of time slots, and the function of protection of content is performed by the security manager 24 of each device A, B.

In order to facilitate communication between devices A and B, in different piconets 1 and 2, device A is associated with a router 28 which stores information related to other devices in its piconet 1, and routing information having instructions on how to route traffic from device A to other devices, such as device B. Correspondingly, device B is also associated with a router 30 having similar functionalities. Thus, any device A or B is associated with a router and these routers 28, 30 query each other periodically in order to update router information, due to the dynamic nature of the ad hoc networks 18.

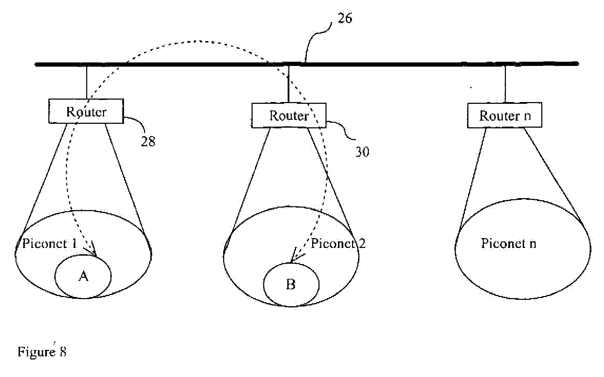

Referring to Figure 7 and Figure 8, in order to establish a secure communication between device A and B, device A performs the steps of acquiring device B's full static address or device ID and a public key or symmetric key in order to perform key agreement, in step 110. In the next step 112, the key agreement yields an authentication key for subsequent communication. Once device A receives a response, in predetermined time, that proves possession of the group public key, in step 114, then device A generates a new set of group keys and transports these keys to device B, in step 116. Device B can then acknowledge receipt of group keys in step 118. Thus, devices A and B require each other's authentic public key and each other's full device ID for authentication and establishment of a secure channel 26, as different piconets may use different short hand address addresses for each device A or B. Therefore, device A and device B form a trusted group and a secure channel is set up if device B trusts any of the intermediate routers, otherwise device B creates its own keys in order to set up a secure channel 26.

Although the invention has been described with reference to certain specific embodiments, various modifications thereof will be apparent to those skilled in the art without departing from the scope of the invention as outlined in the claims appended hereto.
The following are particularly preferred aspects according to the present disclosure.
Numbered clause 1. A method of a communications device enabling communications with other devices in an ad-hoc network, the ad-hoc network comprising a plurality of devices, the method comprising:
   associating a level of trust with each of the plurality of devices; and
   upon obtaining a key, the communications device allocating a level of trust for the key based on the level of trust associated with a source for the key, wherein the level of trust for the key determines functions for which the key wil be used by the communications device in communication with a group of devices who have obtained the key.
Numbered clause 2. The method according to numbered clause 1, wherein said obtaining comprises: generating and distributing the key to the group of devices for communicating therewith; or receiving the key from another devie in the group of devices.
Numbered clause 3. The method according to numbered clause 1 or numbered clause 2, further comprising establishing a trust set comprising devices that are trusted.
Numbered clause 4. The method according to any one of numbered clauses 1 to 3, wherein the ad-hoc network comprises a master device configured to activate an access controller using identifiers of the other devices.
Numbered clause 5. The method according to numbered clause 4, wherein the master device uses an access control list to admit only the other devices that have been positively authenticated to the ad-hoc network.
Numbered clause 6. The method according to numbered clause 4 or numbered clause 5, wherein the master device further comprises a traffic controller to regulate data flow within the ad-hoc network.
Numbered clause 7. The method according to numbered clause 6, wherein the master device allocates a time slot to each of the other devices for message distribution.
Numbered clause 8. The method according to any one of numbered clauses 1 to 7, wherein the level of trust for the key indicates whether the key may be used to both encrypt and decrypt messages sent from and received by the communications device or only decrypt messages received by the communications device.
Numbered clause 9. The method according to any one of numbered clauses 1 to 8, further comprising the communications device determining which of the other devices are presently active in the ad-hoc network.
Numbered clause 10. The method according to numbered clause 9, wherein the determining comprises re-authenticating each of the other devices at a predetermined time.
Numbered clause 11. The method according to numbered clause 10, wherein the re-authenticating comprises performing a challenge-response protocol with each of the other devices to determine which of the other devices are presently included in the ad-hoc network.
Numbered clause 12. A communications device configured to perform the method according to any one of numbered clauses 1 to 11.
Numbered clause 13. A method of maintaining security between a plurality of devices in an ad hoc network, said method comprising the steps of:
   one of said plurality of devices determining that it has been assigned as a master device;
   said master device maintaining an access control list pertaining to which devices are currently part of said ad hoc network;
   said master device receiving from each of said other of said plurality of devices, a periodic communication indicating which devices are presently in said ad hoc network; and
   said master device providing to the other of said plurality of devices, information indicative of which devices are present.
Numbered clause 14. A method of facilitating communication between a first device located in a first ad-hoc network and a second device located in a second ad-hoc network, said method comprising:
   a first relay agent listening for traffic in said first ad-hoc network; and
   said first relay agent sending traffic destined to said second device to a second relay agent in said second ad-hoc network via a relay channel established therebetween,
   for further forwarding by the second relay agent to said second device;
   wherein said first relay agent periodically queries said second relay agent and receives periodic queries from said second relay agent to enable information pertaining to their respective ad-hoc networks to be updated.

The following are further preferred aspects according to the present disclosure.

Numbered clause 1. A method, by a security manager in a first ad-hoc network, of facilitating communication (26) between a first device located in the first ad-hoc network and a second device located in a second ad-hoc network, said method comprising:
authenticating with the first device;
sending the first device a first group key;
receiving, via first and second relay agents, a request for authentication from the second device, wherein the first relay agent is in said first ad-hoc network and the second relay agent is in said second ad-hoc network; and
sending the second device the first group key.

Numbered clause 2. The method of numbered clause 1, wherein the first relay agent includes a router.

Numbered clause 3. The method of numbered clause 1, wherein a first plurality of devices in the first ad-hoc network communicate with each other based on the first group key, and a second plurality of devices in the second ad-hoc network communicate with each other based on a second group key.

Numbered clause 4. The method of numbered clause 1, wherein the first relay agent acts only as a data relay agent in the first ad-hoc network, and the second relay agent acts only as a data relay agent in the second ad-hoc network.

Numbered clause 5. The method of numbered clause 1, wherein said first relay agent periodically queries said second relay agent and receives periodic queries from said second relay agent to enable information pertaining to their respective ad-hoc networks to be updated, and wherein the periodic queries are sent at predetermined intervals.

Numbered clause 6. The method of numbered clause 1, wherein the first relay agent and the second relay agent include transceivers that establish a relay channel.

Numbered clause 7. The method of numbered clause 1, wherein upon receipt of traffic destined to the second device, the second relay agent transmits the traffic to the second device.

Numbered clause 8. The method of numbered clause 1, wherein the first ad-hoc network includes a first controller that allocates time slots for communication in the first ad-hoc network, and the second ad-hoc network includes a second controller that allocates time slots for communication in the second ad-hoc network.

Numbered clause 9. The method of numbered clause 1, wherein the request for authentication includes a key created by the second device..

Numbered clause 10. A security manager in a first ad-hoc network configured to perform operations to facilitate communication (26) between a first device located in the first ad-hoc network and a second device located in a second ad-hoc network, the operations comprising:
authenticating with the first device;
sending the first device a first group key;
receiving, via first and second relay agents, a request for authentication from the second device, wherein the first relay agent is in the first ad-hoc network and the second relay agent is in said second ad-hoc network; and
sending the second device the first group key.

Numbered clause 11. The security manager of numbered clause 10, wherein said first relay agent periodically queries said second relay agent and receives periodic queries from said second relay agent to enable information pertaining to their respective ad-hoc networks to be updated, and wherein the periodic queries are sent at predetermined intervals.

## Claims

1. A method, by a security manager in a first ad-hoc network, of facilitating communication (26) between a first device located in the first ad-hoc network and a second device located in a second ad-hoc network, said method comprising:
sending the first device a first group key;
receiving, via a relay channel, a request for authentication from the second device, wherein the relay channel is established using first and second transceivers, the first transceiver being in said first ad-hoc network and the second transceiver being in said second ad-hoc network; and
sending the second device the first group key.

2. The method of claim 1, wherein a first plurality of devices in the first ad-hoc network communicate with each other based on the first group key, and a second plurality of devices in the second ad-hoc network communicate with each other based on a second group key.

3. The method of any preceding claim, wherein the first ad-hoc network includes a first controller that allocates time slots for communication in the first ad-hoc network, and the second ad-hoc network includes a second controller that allocates time slots for communication in the second ad-hoc network.

4. The method of any preceding claim, wherein the request for authentication includes a key created by the second device.

5. The method of any preceding claim further comprising authenticating with the first device.

6. The method of any preceding claim, wherein a first relay agent includes the first transceiver, and a second relay agent includes the second transceiver.

7. The method of any preceding claim, wherein upon receipt of traffic destined to the second device, the second transceiver transmits the traffic to the second device.

8. The method of any preceding claim, wherein upon receipt of traffic destined to the first device, the first transceiver transmits the traffic to the first device.

9. A security manager in a first ad-hoc network configured to perform operations to facilitate communication (26) between a first device located in the first ad-hoc network and a second device located in a second ad-hoc network, said operations comprising the method of the preceding claim.

10. A computer readable medium comprising computer executable code for performing the method of any of claims 1 to 9.

## Patentansprüche

1. Verfahren zum Erleichtern der Kommunikation (26) zwischen einer ersten Vorrichtung, die sich in einem ersten Ad-hoc-Netz befindet, und einer zweiten Vorrichtung, die sich in einem zweiten Ad-hoc-Netz befindet, durch eine Sicherheits-Verwaltungseinheit in dem ersten Ad-hoc-Netz, wobei das Verfahren umfasst:
• Senden eines ersten Gruppenschlüssels an die erste Vorrichtung;
• Empfangen, über einen Relaiskanal, einer Anfrage zur Authentifizierung von der zweiten Vorrichtung, wobei der Relaiskanal mithilfe erster und zweiter Sendeempfänger erstellt wird, sich der erste Sendeempfänger in besagtem ersten Ad-hoc-Netz befindet und sich der zweite Sendeempfänger in besagtem zweiten Ad-hoc-Netz befindet; und
• Senden des ersten Gruppenschlüssels an die zweite Vorrichtung.

2. Verfahren nach Anspruch 1, wobei eine erste Vielzahl von Vorrichtungen in dem ersten Ad-hoc-Netz miteinander basierend auf dem ersten Gruppenschlüssel kommuniziert, und eine zweite Vielzahl von Vorrichtungen in dem zweiten Ad-hoc-Netz miteinander basierend auf einem zweiten Gruppenschlüssel kommuniziert.

3. Verfahren nach einem der vorstehenden Ansprüche, wobei das erste Ad-hoc-Netz einen ersten Controller aufweist, der Kommunikationszeitfenster in dem ersten Ad-hoc-Netz zuteilt, und das zweite Ad-hoc-Netz einen zweiten Controller aufweist, der Kommunikationszeitfenster in dem zweiten Ad-hoc-Netz zuteilt.

4. Verfahren nach einem der vorstehenden Ansprüche, wobei die Anfrage zur Authentifizierung einen Schlüssel beinhaltet, der von der zweiten Vorrichtung erzeugt wurde.

5. Verfahren nach einem der vorstehenden Ansprüche, ferner umfassend das Authentifizieren mit der ersten Vorrichtung.

6. Verfahren nach einem der vorstehenden Ansprüche, wobei ein erster Relaisagent den ersten Sendeempfänger beinhaltet, und ein zweiter Relaisagent den zweiten Sendeempfänger beinhaltet.

7. Verfahren nach einem der vorstehenden Ansprüche, wobei bei Empfang von für die zweite Vorrichtung bestimmtem Verkehr der zweite Sendeempfänger den Verkehr an die zweite Vorrichtung übermittelt.

8. Verfahren nach einem der vorstehenden Ansprüche, wobei bei Empfang von für die erste Vorrichtung bestimmtem Verkehr der erste Sendeempfänger den Verkehr an die erste Vorrichtung übermittelt.

9. Sicherheitsverwaltungseinheit in einem ersten Ad-hoc-Netz, die dazu konfiguriert ist, Arbeitsprozesse durchzuführen, um eine Kommunikation (26) zwischen einer ersten Vorrichtung, die sich in dem ersten Ad-hoc-Netz befindet, und einer zweiten Vorrichtung, die sich in einem zweiten Ad-hoc-Netz befindet, zu erleichtern, wobei diese Arbeitsprozesse das Verfahren nach dem vorstehenden Anspruch beinhalten.

10. Computer-lesbares Medium aufweisend computer-ausführbaren Code zum Durchführen des Verfahrens nach einem der Ansprüche 1 bis 9.

## Revendications

1. Procédé, par un gestionnaire de sécurité dans un premier réseau ad-hoc, pour faciliter la communication (26) entre un premier dispositif situé dans le premier réseau ad-hoc et un deuxième dispositif situé dans un deuxième réseau ad-hoc, ledit procédé comprenant le fait :
d'envoyer au premier dispositif, une première clé de groupe ;
de recevoir, via un canal de relais, une demande d'authentification du deuxième dispositif, où le canal de relais est établi en utilisant des premier et deuxième émetteurs-récepteurs, le premier émetteur-récepteur étant dans ledit premier réseau ad-hoc et le deuxième émetteur-récepteur étant dans ledit deuxième réseau ad-hoc ; et
d'envoyer au deuxième dispositif, la première clé de groupe.

2. Procédé de la revendication 1, dans lequel une première pluralité de dispositifs dans le premier réseau ad-hoc communiquent les uns avec les autres sur la base de la première clé de groupe, et une deuxième pluralité de dispositifs dans le deuxième réseau ad-hoc communiquent les uns avec les autres sur la base d'une deuxième clé de groupe.

3. Procédé de l'une des revendications précédentes, dans lequel le premier réseau ad-hoc comporte un premier contrôleur qui attribue des intervalles de temps pour la communication dans le premier réseau ad-hoc, et le deuxième réseau ad-hoc comporte un deuxième contrôleur qui attribue des intervalles de temps pour la communication dans le deuxième réseau ad-hoc.

4. Procédé de l'une des revendications précédentes, dans lequel la demande d'authentification comporte une clé créée par le deuxième dispositif.

5. Procédé de l'une des revendications précédentes, comprenant en outre l'authentification avec le premier dispositif.

6. Procédé de l'une des revendications précédentes, dans lequel un premier agent de relais comporte le premier émetteur-récepteur, et un deuxième agent de relais comporte le deuxième émetteur-récepteur.

7. Procédé de l'une des revendications précédentes, dans lequel lors de la réception de trafic destiné au deuxième dispositif, le deuxième émetteur-récepteur transmet le trafic au deuxième dispositif.

8. Procédé de l'une des revendications précédentes, dans lequel lors de la réception de trafic destiné au premier dispositif, le premier émetteur-récepteur transmet le trafic au premier dispositif.

9. Gestionnaire de sécurité dans un premier réseau ad-hoc configuré pour réaliser des opérations pour faciliter la communication (26) entre un premier dispositif situé dans le premier réseau ad-hoc et un deuxième dispositif situé dans un deuxième réseau ad-hoc, lesdites opérations comprenant le procédé de la revendication précédente.

10. Support lisible par ordinateur comprenant un code exécutable par ordinateur pour réaliser le procédé de l'une des revendications 1 à 9.
